# DEMANDE DE BREVET EUROPEEN

(11) **EP 0 737 708 A1**
(43) Date de publication de la demande: **16.10.1996**
(21) Numéro de dépôt: 96400613.4
(22) Date de dépôt: 22.03.1996
(51) Int. Cl.: C08J 5/18, C08L 77/00, C08L 23/02

(54) **Film bi étiré à base de polyamide**

(30) Priorité: 10.04.1995 FR 9504257
(71) Demandeur: ELF ATOCHEM S.A., 92800 Puteaux (FR)
(72) Inventeur: Jammet, Jean-Claude, 27190 Glisolles (FR); Hervy, Catherine, 27470 Serquigny (FR); Causier, Alain, 27300 Bernay (FR)
(74) Mandataire: Neel, Henry

(57) **Abrégé**

L'invention concerne un film bi étiré à base de polyamide.

Elle concerne aussi un matériau multicouches comprenant le film bi étiré et au moins un autre film pouvant être une polyoléfine, de l'EVOH du PVDF. Ces matériaux sont utiles pour faire des sachets d'emballage.

## Description

La présente invention concerne un film bi étiré à base de polyamide et plus particulièrement un film bi étiré constitué d'un mélange comprenant (i) un polyamide aliphatique (A) et au moins 20 parties de polyoléfine (B) pour 100 parties de (A) et (ii) tel que sa déformation à la rupture en traction soit inférieure à 100 %.

On a déjà décrit dans la demande JP 01 172 452 KOKAI des films bi orientés en polyamide contenant 0,1 à 5 % en poids d'un copolymère de l'éthylène d'un acrylate d'alkyle et de l'anhydride maléique. Ces films de 5 à 40 µm d'épaisseur sont résistants à la fatigue en flexion à 5° C. L'addition du copolymère a pour but de rendre plus souple le film de polyamide.

Le brevet CA 2 085 146 décrit des films bi étirés d'un mélange comprenant nécessairement :
- un polyamide aliphatique,
- un polyamide en partie aromatique,
- une polyoléfine modifiée par l'acide acrylique,
- un pigment de taille 0,01 à 15 µm.

Après bi étirage, le film subit un traitement thermique.

Ces films sont barrière à l'oxygène et à l'eau et sont utilisés comme peaux de saucisses.

Les compositions des exemples contiennent 90 % en poids de polyamide.

Le brevet EP 133 867 décrit des films bi orientés par soufflage constitués de polyamide et de copolymère éthylène / acide acrylique ou éthylène / acrylate d'alkyle (ou acétate de vinyle) / anhydride maléique. Le but est d'obtenir une température de travail des films beaucoup plus large que celle des films de polyamide seul.

Les exemples ne concernent que des compositions contenant plus de 90 % de polyamide. La bi orientation est insuffisante, la déformation à la rupture en traction est de plus de 400 %.

EP 450 435 décrit des mélanges de polyamide et des copolymères éthylène/ acide acrylique bi orientés par soufflage pour faire des tubes de 45 mm de diamètre et 45 µm d'épaisseur utiles comme peaux de saucisses.

Aucune propriété mécanique n'est indiquée.

Le but de la présente invention est différent. Les films de l'invention ont une bonne résistance en traction à la rupture aussi bien en sens longitudinal qu'en sens transversal et une déformation à la rupture en traction inférieure à 100 %, que cette traction soit longitudinale ou transversale. On peut produire ces films par étirage longitudinal et étirage transversal sur une machine d'extrusion bi étirage à plat en mode simultané ou séquencé ,ou sur une installation d'extrusion soufflage double bulle. Dans les exemples présentés ici, nous avons utilisé une installation de bi étirage séquencé, et l'étirage longitudinal correspond au premier étirage en sortant de l'extrudeuse.

Une simple bi orientation par soufflage d'une gaine ou d'un tube est insuffisante pour obtenir les films de l'invention. Les films de l'invention ont une brillance plus grande et des propriétés mécaniques en traction à la rupture nettement meilleures que celle des films bi orientés par soufflage.

Un autre avantage de l'invention est que les films sont très faciles à imprimer car leurs propriétés de résistance et de déformation en traction à la rupture permettent facilement le respect du pas du rouleau d'impression évitant ainsi les chevauchements de couleurs et les perturbations de mise en oeuvre dues à un manque de résistance mécanique. Ces films sont faciles à associer à d'autres films par les techniques classiques de la lamination ,de l'enduction,et l'on obtient ainsi des films multicouches utiles pour faire des emballages.

On entend par polyamide les produits de condensation :
- d'un ou plusieurs aminoacides, tels les acides aminocaproïques, amino-7-heptanoïque, amino-11-undécanoique et amino-12-dodécanoique d'un ou plusieurs lactames tels que caprolactame, oenantholactame et lauryllactame ;
- d'un ou plusieurs sels ou mélanges de diamines telles l'hexaméthylène-diamine, la dodécaméthylènediamine, la triméthylhexaméthylène diamine avec des diacides tels que les acides adipique, azélaïque, subérique, sébacique et dodécanedicarboxylique ;
ou des mélanges de tous ces monomères ce qui conduit à des copolyamides.

On peut utiliser des mélanges de polyamide. On utilise avantageusement le PA-6.

On entend par polyoléfines des polymères comprenant des motifs oléfines tels que par exemple des motifs éthylène, propylène, butène-1, etc...

A titre d'exemple, on peut citer :
- le polyéthylène, le polypropylène, les copolymères de l'éthylène avec des alphaoléfines. Ces produits pouvant être greffés par des anhydrides d'acides carboxyliques insaturés tels que l'anhydride maléique ou des epoxydes insaturés tels que le méthacrylate de glycidyle.
- les copolymères de l'éthylène avec au moins un produit choisi parmi (i) les acides carboxyliques insaturés, leurs sels, leurs esters, (ii) les esters vinyliques d'acides carboxyliques saturés, (iii) les acides dicarboxyliques insaturés, leurs sels, leurs esters, leurs hemiesters, leurs anhydrides (iv) les epoxydes insaturés. Ces copolymères pouvant être greffés par des anhydrides d'acides dicarboxyliques insaturés ou des epoxydes insaturés.
- les copolymères blocs styrène / éthylène-butène / styrène (SEBS) éventuellement maléisés.

On peut utiliser des mélanges de deux ou plusieurs de ces polyoléfines.

On utilise avantageusement :
- le polyéthylène,
- les copolymères de l'éthylène et d'une alpha-oléfine,
- les copolymères de l'éthylène / d'un (méth)acrylate d'alkyle,
- les copolymères de l'éthylène / d'un (méth)acrylate d'alkyle / de l'anhydride maléique, l'anhydride maléique étant greffé ou copolymérisé,
- les copolymères de l'éthylène / d'un (méth)acrylate d'alkyle / du méthacrylate de glycidyle, le méthacrylate de glycidyle étant greffé ou copolymérisé,
- le polypropylène.

Il est recommandé, si les polyoléfines ont peu ou pas de fonctions pouvant faciliter la compatibilisation, d'ajouter un agent compatibilisant.

L'agent compatibilisant est un produit connu en soi pour compatibiliser les polyamides et les polyoléfines.

On peut citer par exemple :
- le polyéthylène, le polypropylène, les copolymères éthylène propylène, les copolymères éthylène-butène, tous ces produits étant greffés par de l'anhydride maléique ou du méthacrylate de glycidyle.
- les copolymères éthylène / (méth)acrylate d'alkyle / anhydride maléique, l'anhydride maléique étant greffé ou copolymérisé,
- les copolymères éthylène / acétate de vinyle / anhydride maléique, l'anhydride maléique étant greffé ou copolymérisé.
- les deux copolymères précédents dans lesquels l'anhydride maléique est remplacé par le méthacrylate de glycidyle,
- les copolymères éthylène/acide (méth)acrylique éventuellement leurs sels,
- le polyéthylène, le propylène ou les copolymères éthylène propylène, ces polymères étant greffés par un produit présentant un site réactif avec les amines ; ces copolymères greffés étant ensuite, éventuellement, condensés avec des polyamides ou des oligomères polyamides ayant une seule extrémité amine.

Ces produits sont décrits dans les brevets FR 2 291 225 et EP 342 066 dont le contenu est incorporé dans la présente demande.

La quantité de polyoléfine (B) peut être comprise entre 20 et 70 parties pour 100 parties de polyamide (A).

La quantité de compatibilisant est la quantité suffisante pour que la polyoléfine se disperse dans le polyamide. Elle peut représenter jusqu'à 20 % du poids de la polyoléfine. On fabrique ces polymères par mélange de polyamide, de polyoléfine et éventuellement de compatibilisant selon les techniques usuelles de mélange à l'état fondu (bi vis, Buss, monovis).

Avantageusement, le polyamide aliphatique (A) des films de l'invention est du polyamide 6 (PA-6). Avantageusement, la polyoléfine (B) est un mélange des produits (B1) et (B2) suivants :

B1 comprend au moins un produit choisi parmi (i) le polyéthylène de toute densité, (ii) les copolymères de l'éthylène et d'une alphaoléfine.

B2 comprend au moins un produit choisi parmi les copolymères éthylène / (méth)acrylate d'alkyle / anhydride maléique ou (méth)acrylate de glycidyle.

De tels produits sont décrits dans les brevets US 5 070 145 et EP 564 338.

(B) peut être aussi le polypropylène, il est alors recommandé d'ajouter un comptabilisant qui est avantageusement un copolymère éthylène / propylène majoritaire en nombre de motifs propylène, greffé par l'anhydride maléique, puis condensé ensuite avec des oligomères mono aminés de caprolactame.

De tels mélanges de polyamide et de polypropylène sont décrits dans le brevet US 5 342 886.

On utilise de préférence les mélanges dans lesquels (A) est le polyamide 6 et (B) est un mélange de B1 choisi parmi le PEHD ou le VLDPE et B2 un copolymère de l'éthylène d'un (méth)acrylate d'alkyle et de l'anhydride maléique.

La quantité de A peut être de 50 à 70 parties pour 20 à 40 parties de B1 et 5 à 10 parties de B2.

Les copolymères B2 peuvent comprendre 15 à 50 % en poids de (méth)acrylate et 1 à 10 % en poids d'anhydride maléique.

La déformation à la rupture en traction est avantageusement inférieure à 60 % aussi bien dans le sens longitudinal que dans le sens transversal.

La résistance en traction à la rupture peut être comprise entre 50 et 150 MPa.

L'épaisseur de ces films est habituellement comprise entre 15 et 50 µm.

On peut produire ces films par un bi étirage conventionnel, les taux d'étirage étant compris entre 2 et 7 dans le sens longitudinal et 1,5 et 7 dans le sens transversal. Avantageusement, ces taux sont respectivement compris entre 2 et 5 et entre 1,5 et 3. Il est recommandé que la température de filière soit comprise entre 250 et 270° C et avantageusement vers 260°C.

La présente invention concerne aussi des matériaux multicouches comprenant le film bi étiré décrit ci-dessus. On peut fabriquer ces matériaux par laminage, couchage, contre collage ou coextrusion. On peut utiliser par exemple des films de polyoléfine, d'EVOH (copolymère comprend des motifs éthylène et des motifs alcool vinylique) de polyamides ou d'alliages de polyamide, de polyfluorure de vinylidène, du papier ou du carton.

Il peut être nécessaire d'utiliser un liant entre au moins deux de ces films. A titre d'exemple de matériaux, on peut citer les multicouches suivants :
polyéthylène / film bi étiré de l'invention / polyéthylène

A titre d'exemple de liant, on peut citer :
- le polyéthylène, le polypropylène, les copolymères de l'éthylène et d'au moins une alpha oléfine, des mélanges de ces polymères, tous ces polymères étant greffés par des anhydrides d'acides carboxyliques insaturés tels que par exemple, l'anhydride maléique. On peut aussi utiliser des mélanges de ces polymères greffés et de ces polymères non greffés.
- les copolymères de l'éthylène avec au moins un produit choisi parmi (i) les acides carboxyliques insaturés, leurs sels, leurs esters, (ii) les esters vinyliques d'acides carboxyliques saturés, (iii) les acides dicarboxyliques insaturés, leurs sels, leurs esters, leurs hemiesters, leurs anhydrides, (iv) les epoxydes insaturés ; ces copolymères pouvant être greffés par des anhydrides d'acides dicarboxyliques insaturés tels que l'anhydride maléique ou des epoxydes insaturés tels que le méthacrylate de glycidyle.

On peut aussi ajouter à l'une ou à chacune des couches un produit qui améliore leur adhésion sans devoir utiliser une couche de liant. Ce produit peut être le liant décrit ci-dessus.

Ces matériaux multicouches sont utiles pour faire des sachets, des poches, par pliage, soudure et toutes techniques de façonnage de films. Les applications sont celles que l'on trouve dans le secteur de l'emballage, notamment l'emballage alimentaire, mais aussi l'emballage de produits chimiques ou cosmétiques. Leur très bonne tenue à la chaleur et leur grand pouvoir de rétraction les destinent également aux applications de films rétractables. Les qualités mécaniques de ces films permettant une excellente qualité des impressions, on peut aussi les utiliser dans le domaine de l'operculage de pôt et barquette ainsi que dans celui de l'etiquetage. Un autre avantage de ces matériaux multicouches est leur tenue à la stérilisation, on peut donc les utiliser pour des emballages nécessitant une stérilisation.

On rappelle que ces films présentent de bonnes propriétés barrières aux gaz, à l'oxygène et une bonne résistance chimique.

La présente invention concerne aussi ces sachets et tous les articles pouvant être confectionnés à partir de ces films. On citera le DOYPACK employé aujourd'hui dans l'emballage alimentaire ainsi que dans l'emballage de peinture.

Ces matériaux multicouches comprenant le film bi étiré de l'invention sont utiles aussi dans l'industrie alimentaire comme peaux de saucisses.

Ces matériaux multicouches sont utiles aussi en banderolage de tubes en caoutchouc ou en thermoplastique pour leur donner des propriétés barrière ou augmenter leur résistance mécanique. La présente invention concerne aussi ces peaux de saucisses et ces tuyaux.

### Exemples

On prépare un mélange qu'on appelle PRODUIT 1 comprenant :
A : 65 parties de polyamide 6 de Melt index 20 (235°C/2.16Kg)
B1 : 25 parties de polyéthylène LLDPE de Melt index.0.9 (190°C/2.16Kg)
B2 : 10 parties d'un terpolymère éthylène / acrylate de.butyl / anhydride maléique.
contenant 5.1 à 7 % en poids d'acrylate de butyl et 2.7 à 3.4 % en poids d'anhydride maléique.

On prépare un mélange qu'on appelle PRODUIT 2, la seule différence avec le précédent est que B1 est un polyéthylène PEHD de Melt index 0.3 (190°C/2.16Kg).

On utilise aussi à titre de comparaison un polyamide 6 de Melt index 20 (235°C/2.16Kg) qu'on appelle PRODUIT 3.

On a fabriqué différents films en utilisant les procédés suivants :
- procédé Cast, c'est-à-dire une extrusion avec un simple refroidissement sur un cylindre, qui confère au film une très légère orientation dans le sens de l'extrusion.
- extrusion soufflage sur machine KAUFMAN,procedé classique qui consiste à souffler une gaine qui va se refroidir dans l'air. Ce procédé donne une légère orientation longitudinale et transversale .
- bi étirage sur machine CELLIER.Ce procédé, de part la température à laquelle se fait l'étirage, induit une très grande orientation au polymère.Le procédé est en deux étapes, d'abord un étirage longitudinale et ensuite un étirage transversal.

Les résultats sont rassemblés sur le tableau 1 suivant.

Dans ce tableau :
- A la rubrique perméabilité :
   a) OXTRAN désigne le type d'appareil (société MOCOM) de mesure de la perméabilité à l'oxygène.
   b) "RH" veut dire "Relative humidity".
- à la rubrique DSC : DSC désigne..differential scanning calorimetry
- à la rubrique propriétés mécaniques:
   - traction selon norme R527-1:1993 - haltères type 5A découpées à l'emporte pièce - vitesse de traction : 50mm/mn -
   - déchirure selon norme ASTM D1922-67
   - dart test selon norme NFT 54-109 méthode A
- à la rubrique propriétés optiques
   - brillance selon norme ASTM D523 - angle 60°
   - haze selon norme ASTM D 1003
   - transmission lumineuse selon norme ASTM D 1003
   - "lumaquitaine" désigne un appareil mis au point par ELF ATOCHEM qui permet de mesurer la transparence selon une norme interne ATO.

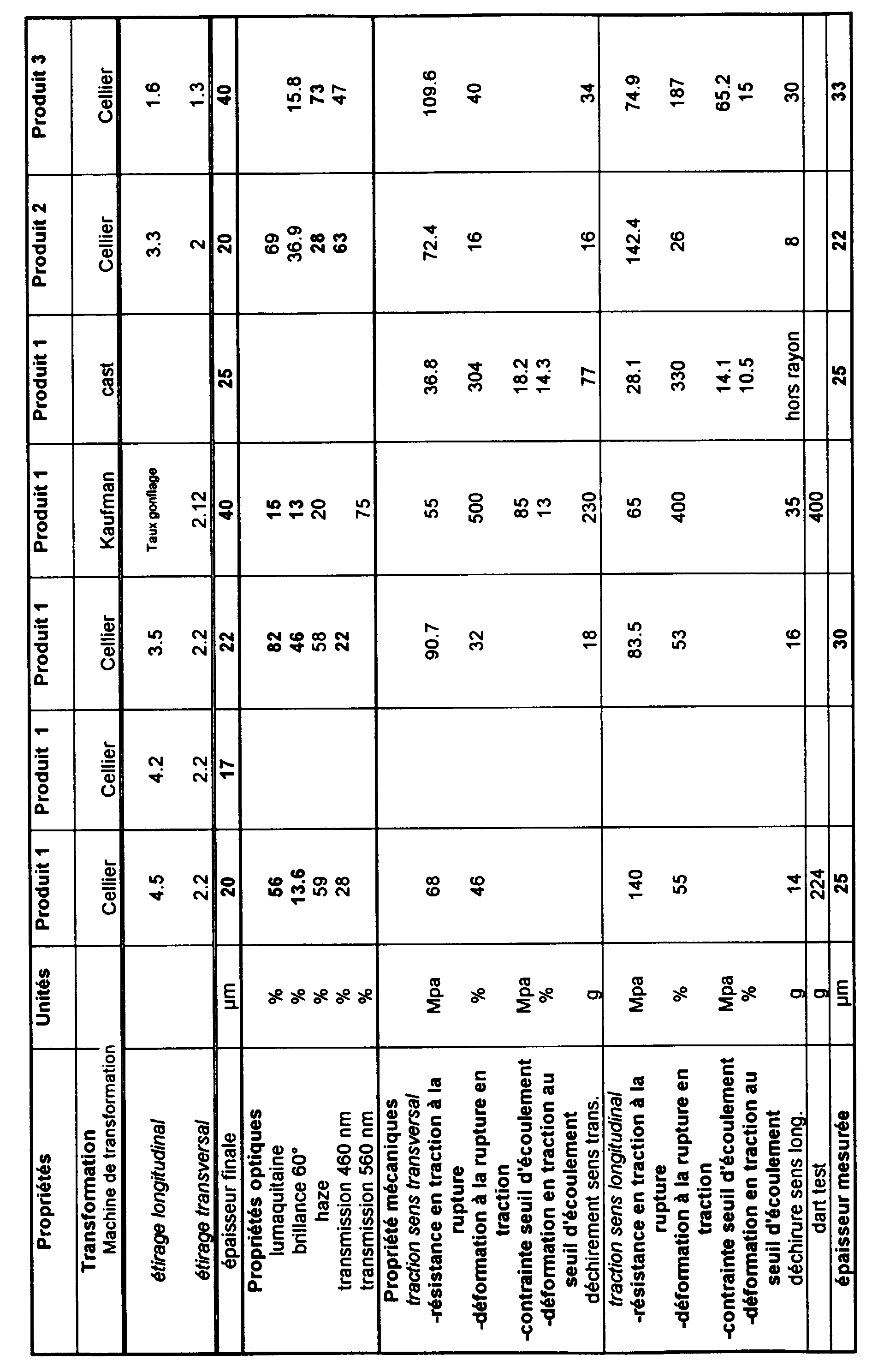

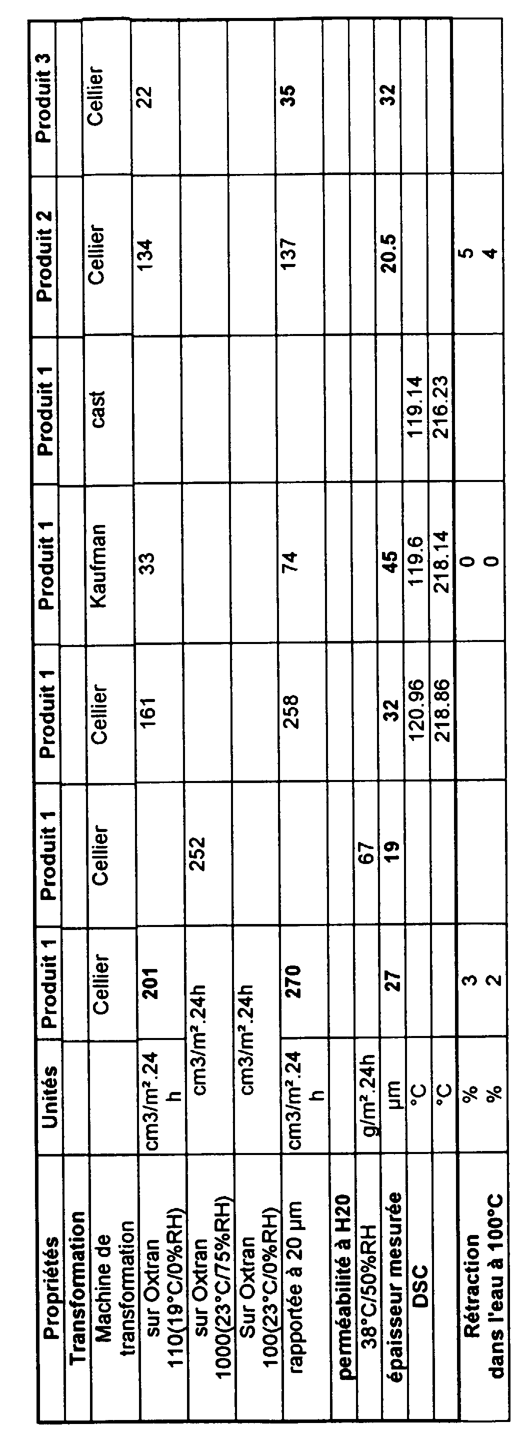

## Revendications

1. Film bi-étiré constitué d'un mélange comprenant (i) un polyamide aliphatique (A) et au moins 20 parties de polyoléfine (B) pour 100 parties de (A) et (ii) tel que sa déformation à la rupture en traction soit inférieure à 100 %.

2. Film selon la revendication 1 dans lequel les taux d'étirage sont compris entre 2 et 7 dans le sens longitudinal et entre 1,5 et 7 dans le sens transversal.

3. Film selon la revendication 1 ou 2 dans lequel (A) est le polyamide 6 et (B) est un mélange :
- d'au moins un produit (B1) choisi parmi le polyéthylène et les copolymères de l'éthylène et d'une alphaoléfine ;
- d'au moins un produit (B2) choisi parmi les copolymères de l'éthylène d'un (méth)acrylate d'alkyle et de l'anhydride maléique.

4. Matériau multicouche comprenant le film bi étiré des revendications précédentes.

5. Sachet d'emballage obtenu avec le matériau de la revendication 4.

6. Peau de saucisse constituée du matériau de la revendication 4.

7. Tuyau en caoutchouc ou en thermoplastique banderolé avec le matériau de la revendication 4.
